# EUROPÄISCHE PATENTSCHRIFT

(11) **EP 1 190 280 B1**
(45) Veröffentlichungstag und Bekanntmachung des Hinweises auf die Patenterteilung: **25.08.2004**
(21) Anmeldenummer: 00951229.4
(22) Anmeldetag: 20.06.2000
(51) Int. Cl.: G05B 19/418, G01S 5/04

(54) **VERFAHREN UND VORRICHTUNG ZUR ERFASSUNG DER BEWEGUNGSRICHTUNG EINES MOBILEN DATENSPEICHERS INSBESONDERE BEI EINEM IDENTIFIKATIONSSYSTEM**
METHOD AND DEVICE FOR DETECTING THE DIRECTION OF MOVEMENT OF A MOBILE DATA MEMORY, ESPECIALLY IN AN IDENTIFICATION SYSTEM
PROCEDE ET DISPOSITIF POUR DETECTER LE SENS DE MOUVEMENT D'UNE MEMOIRE MOBILE, NOTAMMENT DANS UN SYSTEME D'IDENTIFICATION

(30) Priorität: 28.06.1999 DE 19929496
(43) Veröffentlichungstag der Anmeldung: 27.03.2002
(73) Patentinhaber: SIEMENS AKTIENGESELLSCHAFT, 80333 München (DE)
(72) Erfinder: SCHIEFER, Martin, A-3100 St. Pölten (AT); VEITH, Peter-Ernst, A-1190 Wien (AT); PUSCH, Wolfgang, A-1060 Wien (AT)
(86) Internationale Anmeldenummer: PCT/DE2000/002015
(87) Internationale Veröffentlichungsnummer: WO 2001/001210

(56) Entgegenhaltungen:
- WO-A-98/43106
- GB-A- 2 253 107
- JP-A- 10 093 323
- US-A- 5 592 180
- US-A- 5 592 181
- US-A- 5 715 042

## Beschreibung

Bei stationären Produktions- und Transportanlagen müssen in der Regel eine Vielzahl von Objekten bzw. Gütern mit Hilfe von technischen Transporteinrichtungen, wie z.B. Förderbändern, möglichst schnell und frei bewegt werden. Die Objekte können unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Anlage z.B. die Art und den Zustand der in räumlicher Nähe zu diesen Stellen aktuell befindlichen Objekte schnell und ungehindert zu erfassen. Hierzu werden einerseits die Objekte mit mobilen Datenträgern versehen, welche z.B. die Art und den aktuellen Zustand des Objektes kennzeichnende Daten enthalten. Andererseits sind an bestimmten Stellen der Anlage stationäre Kommunikationseinrichtungen plaziert und meist mit einer zentralen Datenverarbeitungseinrichtung verbunden. Die Kommunikationseinrichtungen ermöglichen zumindest einen berührungslosen Empfang von Datensignalen, die von den mobilen Datenträgern über eine meist funkbasierte Datenübertragungsstrecke abgesendet werden. Abhängig von der Art der Anlage kann es sich bei den Kommunikationseinrichtungen um reine Empfangseinrichtungen bzw. auch um Sende- und Empfangseinrichtungen handeln, welche einen bidirektionalen Austausch von Datensignalen mit den mobilen Datenspeichern ermöglichen.

Aus der US 5,592,181 geht ein Verfahren zur Positionsbestimmung eines Transmitters hervor, wobei der Einfallswinkel von ankommenden Datensignalen ausgewertet wird.

Aus der US 5,592,180 ist ein System zum Auffinden von SMR-Radio-Systemen unter Auswertung von Winkelinformationen von empfangenen Signalen bekannt.

Auch in der GB 2 253 107 A ist ein Verfahren zur Ortsbestimmung von Funkquellen beschrieben.

Die US 6,087,986 betrifft ein Verfahren zum Herausfiltern bestimmter Trägerbestandteile von empfangenen Signalen.

In der US 5,715,042 wird eine Positionsbestimmung eines Fahrzeugs über einen Empfänger mittels einer Winkelauswertung von empfangenen Signalen vorgenommen.

Ein System zur berührungslosen Erfassung von Datensignalen der oben beschriebenen Art wird auch als ein Identifikationssystem bezeichnet. Werden z.B. in einem Produktionsablauf mit mobilen Datenträgern versehene Objekte in die Nähe einer ausgewählten Stelle befördert, so kann eine dort platzierte Empfangs- bzw. Sende- und Empfangseinrichtung auf berührungslose Weise Datensignale aus den mobilen Datenträgern derjenigen Objekte erfassen, welche sich aktuell in ihrem Erfassungsbereich befinden. Die in diesen Datensignalen enthaltenen Daten können mit Hilfe einer übergeordneten zentralen Datenverarbeitungseinrichtung dekodiert und zu unterschiedlichen Zwekken ausgewertet werden, z.B. zur Verfolgung des Laufes der mit den mobilen Datenträgern versehenen Objekte und z.B. abhängig davon, zur Steuerung von Betriebsmitteln der jeweiligen technischen Anlage. Die Daten können auch aktualisiert werden, und dann in Form von Datensignalen wieder an den mobilen Datenträger zurückgesendet werden.

Bei technischen Anlagen kann es vorkommen, daß im Strom der Güter einzelne Güter unterschiedliche Bewegungsrichtungen aufweisen. In der Praxis können Güter von einer oder mehreren Transporteinrichtungen u.U. in einer bzw. in einer umgekehrten Richtung bewegt werden. So können Güter an einer bestimmten Stelle, z.B. an einem Tor, in eine Produktionseinrichtung einfahren, bzw. diese z.B. nach einer Bearbeitung an der gleichen Stelle wieder verlassen. Kann an derartigen Punkten die Bewegungsrichtung einzelner Güter erfaßt werden, so können mit diesen Informationen weitere Teile der Produktionseinrichtung gesteuert werden.

Die Bewegungsrichtung von Gütern wird in technischen Anlagen bislang üblicherweise mit Hilfe von Lichtschranken, Schaltmitteln u. dgl. bestimmt. Dies ist zum einen aufwendig, da z.B. an Transportmitteln zusätzliche, in der Regel elektromechanische Komponenten angebracht werden müssen, die ausschließlich zur Erfassung der Bewegungsrichtung dienen. Ein weiterer Nachteil wird darin gesehen, daß es hiermit aber nur möglich ist, die Bewegungsrichtung von Strömen möglichst gleichartiger Güter zu erfassen. Ein besonderes Problem tritt bei derartigen Anordnungen dann auf, wenn die Bewegungsrichtung einzelner Güter erfaßt werden soll. Bei herkömmlichen Anlagen ist es nicht ohne weiteres möglich, zumindest die Art und u.U. den aktuellen Zustand eines Gutes und dessen Bewegungsrichtung gleichzeitig zu erfassen und in Beziehung zueinander zu setzen.

Der Erfindung liegt die Aufgabe zugrunde, ein Verfahren und eine Vorrichtung anzugeben, womit die Bewegungsrichtung von mobilen Datenträgern auf berührungslose Weise und möglichst ohne zusätzlichen Aufwand an technischen Komponenten erfaßt werden kann.

Diese Aufgabe wird gelöst mit dem in den Ansprüchen angegebenen Verfahren und Vorrichtungen. Vorteilhafte weitere Ausgestaltungen der Erfindung sind in den weiteren Unteransprüchen enthalten.

Bei dem erfindungsgemäßen Verfahren zur Erfassung der Bewegungsrichtung eines mobilen Datenträgers werden entlang einer Bewegungsbahn an mindestens zwei verschiedenen Empfangspunkten der Bewegungsbahn Datensignale eines mobilen Datenträgers erfasst. Es werden Veränderungen des Empfangs der Datensignale untereinander an den Empfangspunkten verglichen und daraus in einer adaptiven Empfangseinrichtung ein Indikator für die Bewegungsrichtung eines mobilen Datenträgers bestimmt. Die adaptive Empfangseinrichtung ist als Sende- und Empfangseinrichtung zum bidirektionalen Austausch von Datensignalen mit dem mobilen Datenträger ausgebildet, empfängt über mindestens einen der Empfangspunkte Datensignale vom mobilen Datenträger und strahlt über mindestens einen zusätzlichen Sender Datensignale an den mobilen Datenträger.

Der Vorteil des erfindungsgemäßen Verfahrens liegt darin, daß die Erkennung der Bewegungsrichtung ausschließlich unter Verwendung von Datensignalen erfolgt, welche die mobilen Datenträger zum Zwecke der Kommunikation mit einer Empfang- bzw. einer Sende- und Empfangseinrichtung absenden. Dies ist besonders vorteilhaft, da die Datensignale somit in zweifacher Weise genutzt werden können, nämlich einerseits als Träger für Daten und andererseits als Medium für eine Bewegungsrichtungserkennung. Werden derartige Datensignale an zumindest zwei, an der Bewegungsbahn der Datenträger liegenden Empfangspunkten empfangen, so kann aus dem Vergleich von Änderungen dieser Datensignale die Bewegungsrichtung der Datenträger detektiert werden. Es sind somit keinerlei zusätzliche separate Elemente wie z.B. Lichtschranken u.ä. erforderlich. Vielmehr kann die Bewegungsrichtungserkennung additiv zum Datenaustausch zwischen mobilen Datenträgern und einer Empfangs- bzw. Sende- und Empfangseinrichtung berührungslos und auf rein elektronischem Wege erfolgen.

Bei einer ersten Ausführung des erfindungsgemäßen Verfahrens wird der Indikator für die Bewegungsrichtung unter Zuhilfenahme eines Vergleiches von Veränderungen der Empfangsfeldstärken eines Datensignals an den Empfangspunkten bestimmt. Dabei spielen die datentechnischen Inhalt eines Datensignals keine Rolle. Vielmehr ist es bereits durch Vergleiche insbesondere von den Zu- und Abnahmen der Empfangsfeldstärken des Datensignales an mindestens zwei Empfangspunkten detektierbar, ob sich der mobile Datenträger, welcher dieses Datensignal absendet, von einem Empfangspunkt entfernt oder in dessen Richtung bewegt. Nach Auswertung der Empfangsfeldstärken kann das Datensignal in herkömmlicher Weise dekodiert und der datentechnische Inhalt weiterverarbeitet werden.

Bei einer weiteren Ausführung des erfindungsgemäßen Verfahrens werden durch einen Vergleich der Empfangsfeldstärken der Datensignale an den Empfangspunkten Gewichtungsfaktoren so abgeleitet, daß einem Datensignal, welches eine starke bzw. schwache Empfangsfeldstärke aufweist, ein großer bzw. kleiner Gewichtungsfaktor zugeordnet wird. Dies hat zur Folge, daß Datensignale von denjenigen Empfangspunkten, welche nahe zum mobilen Datenträger liegen und somit eine gute Empfangsqualität aufweisen, weiter verstärkt werden, während die Datensignale von Empfangspunkten, die weiter entfernt zum mobilen Datenträger liegen und somit eine schlechtere Empfangsqualität aufweisen, weiter abgeschwächt werden. Hiermit wird der Signal-Störabstand und damit die Qualität des Empfangs verbessert.

Die Adaption der Datensignale mittels Gewichtung kann in zweifacher Weise ausgenutzt werden. Einerseits kann in einer nachfolgenden Auswertungseinheit unter Heranziehung aller momentan verfügbaren Datensignale von den einzelnen Empfangspunkten und unter Berücksichtigung von deren Gewichtung ein optimales Summen-Datensignal synthetisiert werden, welches einen möglichst großen Signal-Störabstand aufweist und somit möglichst fehlerfrei dekodierbar ist. Andererseits kann auch der Indikator für die Bewegungsrichtung vorteilhaft unter Zuhilfenahme einer Auswertung der mit den Gewichtungsfaktoren gewichteten, d.h. adaptierten, Datensignale bestimmt werden. Hierdurch kann die Selektivität der Bewegungsrichtungserfassung verbessert werden.

Bei einer weiteren Ausführung des erfindungsgemäßen Verfahrens wird der Indikator für die Bewegungsrichtung unter Zuhilfenahme eines Vergleiches der Art von Datensignalen bestimmt. Dabei kann von einer Empfangs- bzw. Sende- und Empfangseinrichtung insbesondere ausgewertet werden, ob es sich bei den an den Empfangspunkten empfangenen Datensignalen um Fremd- oder Nutzsignale handelt. Durch eine Verfolgung des Empfangs eines Datensignals an den einzelnen Empfangspunkten, dessen Typ insbesondere als ein Nutzsignal erkannt wurde, ist es ebenfalls möglich zu detektieren, ob sich ein dazugehöriger mobiler Datenträger von einem Empfangspunkt entfernt oder in dessen Richtung bewegt. Auch in diesem Fall kann ein Datensignal nach einer Auswertung von dessen Art zum Zwecke der Bewegungsrichtungserkennung in herkömmlicher Weise dekodiert und dessen datentechnische Inhalte weiterverarbeitet werden.

Bei einer weiteren Ausführung des erfindungsgemäßen Verfahrens erfolgt eine Auswertung von Datensignalen, welche an unterschiedlichen Empfangspunkten empfangen werden, zum Zwecke der Bewegungsrichtungserkennung erst, nachdem diese dekodiert und deren logische Inhalte bestimmt wurden. Diese Ausführung bietet den besonderen Vorteil, daß zur Bewegungsrichtungserkennung und zur Verarbeitung der logischen Inhalte der Datensignale keine unterschiedlichen Zustände der Datensignale herangezogen werden müssen. Vielmehr werden die an den Empfangspunkten empfangenen Datensignale in herkömmlicher Weise dekodiert und stehen dann zur weiteren Verarbeitung insbesondere in einer binären Datenverarbeitungseinheit zur Verfügung. Als einer dieser Verarbeitungsschritte kann dann in der Datenverarbeitungseinheit durch Auswertung insbesondere der zeitlichen Abfolge, in der einzelne Datensignale an den Empfangspunkt empfangen wurde und durch Vergleich von deren Inhalten der Indikator für die Bewegungsrichtung bestimmt werden. Wird z.B. ein Datensignal, welches nach der Dekodierung einem bestimmten mobilen Datenträger zugeordnet werden kann, nacheinander an unterschiedlichen Empfangspunkten empfangen, so ist aus der zeitlichen Abfolge dieses Empfangs detektierbar, ob sich der mobile Datenträger, welcher dieses Datensignal absendet, von einem Empfangspunkt entfernt oder in dessen Richtung bewegt.

Diese Ausführung des erfindungsgemäßen Verfahren bietet den weiteren Vorteil, daß die logischen Inhalte von Datensignalen nach der Dekodierung einzelnen mobilen Datenträgern eindeutig zugeordnet werden können. Hierdurch wird es dann möglich, die Bewegungsrichtung von mehreren mobilen Datenträgern zu erfassen, die auf der Bewegungsbahn nacheinander bzw. nahezu gleichzeitig an den Empfangspunkten vorbeilaufen.

Schließlich kann die Bestimmung eines Indikators für die Bewegungsrichtung auch unter gleichzeitiger Zuhilfenahme von mehreren der oben beschriebenen Methoden erfolgen. So können die Datensignale vorteilhaft gleichzeitig sowohl unter Berücksichtigung von deren Empfangsfeldstärke als auch deren logische Dateninhalte, welche nach einer Dekodierung zur Verfügung stehen, auswertet werden.

Eine vorteilhafte Vorrichtung zur Durchführung des erfindungsgemäßen Verfahrens enthält eine adaptive Empfangseinrichtung. Diese weist zumindest zwei Antennen auf, welche entlang der Bewegungsbahn eines mobilen Datenträgers angeordnet sind und zumindest den Empfang von Datensignalen ermöglichen. Die Antennen sind mit einer Auswertungseinheit verbunden, welche aus den empfangenen Datensignalen einen Indikator für die Bewegungsrichtung eines mobilen Datenträgers bestimmt.

Das erfindungsgemäße Verfahren und die zur deren Durchführung geeigneten Vorrichtung können besonders vorteilhaft bei einem Identifikationssystem angewendet werden, welches zumindest an beweglichen Gütern angebrachte mobile Datenträger aufweist, und bei dem in einem mobilen Datenträger das jeweilige Gut kennzeichnende Daten gespeichert sind.

Die Erfindung und weitere vorteilhafte Ausführungen derselben werden an Hand der in den nachfolgend kurz angegebenen Figuren dargestellten Blockschaltbilder näher erläutert. Dabei zeigt
- Figur 1:: das Blockschaltbild einer ersten beispielhaften Vorrichtung, welche besonders vorteilhaft zur Durchführung des erfindungsgemäßen Verfahrens geeignet ist, und bei dem ein mobiler Datenträger beispielhaft in den Erfassungsbereich eintritt,
- Figur 2a :: das Blockschaltbild einer weiteren, zur Durchführung des erfindungsgemäßen Verfahrens geeigneten Vorrichtung, bei in Ergänzung zur Ausführung von Figur 1, zusätzlich eine Adaption der an verschiedenen Empfangspunkten empfangenen Datensignale erfolgt, und bei dem ebenfalls ein mobiler Datenträger beispielhaft in den Erfassungsbereich eintritt, und
- Figur 2b :: ein der Figur 2a weitgehend entsprechendes Blockschaltbild, wobei aber gegenüber dem Zustand von Figur 2a der mobile Datenträger den Erfassungsbereich bereits teilweise durchquert hat.

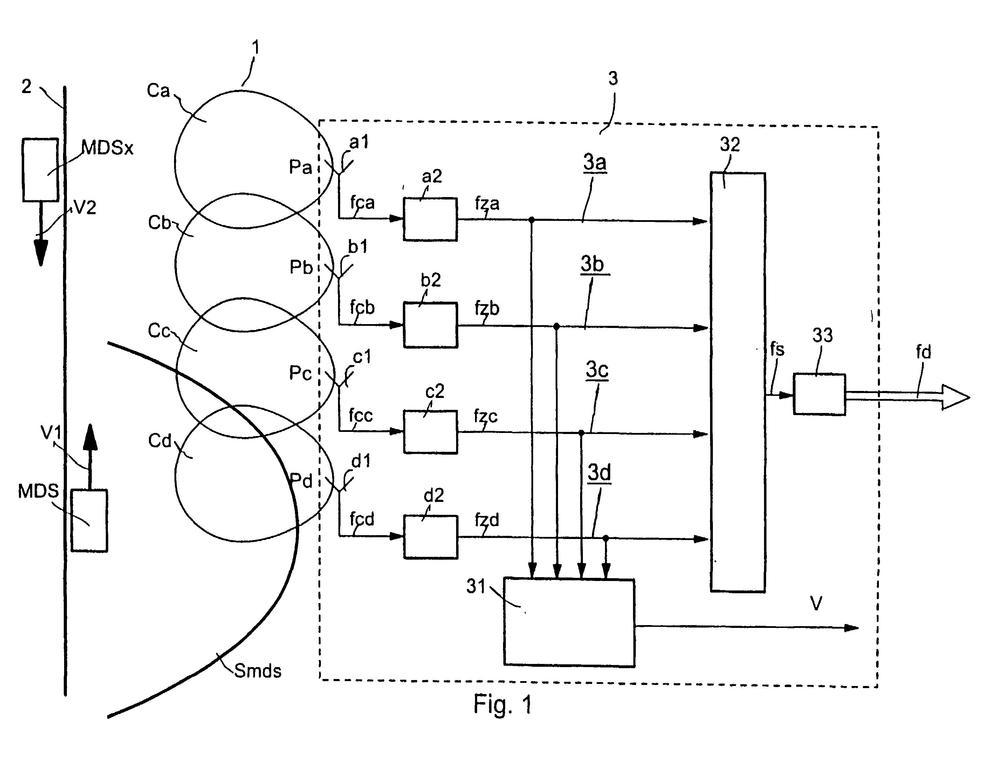

Im Blockschaltbild der Figur 1 ist auf der linken Seite beispielhaft ein mobiler Datenträger MDS gezeigt, welcher sich entlang einer Bewegungsbahn 2 in einer ersten Richtung V1 bewegt, d.h. in der Blattebene von unten nach oben. Der Abstrahlungsbereich der von dem mobilen Datenträger MDS abgesendeten Datensignale ist im Beispiel der Figur 1 durch eine gekrümmte Feldlinie Smds symbolisch dargestellt. Entlang dieser Feldlinie soll die Empfangsfeldstärke der Datensignale einen übereinstimmenden Wert aufweisen. Entsprechende Feldlinien könnten ringförmig innerhalb bzw. außerhalb der Feldlinie Smds eingezeichnet werden. Diesen würden dann größere bzw. kleinere Werte der Empfangsfeldstärke symbolisieren. Derartige zusätzliche Feldlinien sind aber in den Figuren aus Gründen der besseren Übersichtlichkeit nicht dargestellt.

In Figur 1 ist desweiteren auf der rechten Seite eine Empfangseinrichtung 3 dargestellt. Diese enthält beispielhaft vier parallele Kanäle 3a...3d. Jeder Kanal enthält eine Antenne a1...d1, welche an einem Empfangspunkt Pa...Pd entlang der Bewegungsbahn 2 angeordnet ist. Die Empfangsreichweiten der Antennen a1...d1 sind in Figur 1 ebenfalls durch blasenförmige Feldlinien Ca...Cd symbolisiert. Die Summe dieser sogenannten "Empfangskeulen" Ca...Cd bildet den Erfassungsbereich der Einrichtung 3. Die in Figur 1 dargestellte Anordnung kann auch als sogenannte "adaptive Antenne" bezeichnet werden. Dabei ist eine bestimmte Anzahl von gleichwertigen und entlang einer Bewegungsbahn angeordneten Antennen quasi in einer Linie zusammengeschaltet. Vorteilhaft sind deren sogenannte "Empfangskeulen" Ca...Cd möglichst gut ausgerichtet und fokussiert, und weisen eine möglichst geringe Überlappung zueinander auf.

Die Antennen a1...d1 empfangen die vom mobilen Datenträger MDS abgesendeten Datensignale in Form von hochfrequenten Antennensignalen fca...fzd. Diese werden jeweils einem Empfänger a2...d2 zugeführt, welcher hieraus zwischenfrequente Antennensignale fza...fzd bildet. Diese werden einer Verarbeitungseinheit 32 zugeführt, welche hieraus ein aufbereitetes Summen-Datensignal fs synthetisiert. Dieses wird schließlich in einem Demodulator 33 entschlüsselt und steht dann als dekodierter, bevorzugt digitaler Datenstrom fd zur weiteren Verarbeitung zur Verfügung. Hierzu geeignete bevorzugt digitale Recheneinheiten sind aus Gründen der Übersicht in den Figuren nicht weiter dargestellt.

Im Beispiel der Figur 1 werden die Datensignale des mobilen Datenträgers MDS in Form der vier Antennensignale fza...fzd erfaßt. Auf Grund der relativen Position des mobilen Datenträgers MDS zu den einzelnen Antennen a1...d1 ist der Empfang an den vier Empfangspunkten Pa...Pd unterschiedlich. Auf Grund der Bewegung des mobilen Datenträgers MDS entlang der Bewegungsbahn 2 unterliegt der Empfang Veränderungen. Werden diese Veränderungen des Empfangs der Datensignale fca...fcd an den einzelnen Empfangspunkten Pa...Pd verglichen, so kann daraus ein Indikator V für die Bewegungsrichtung eines mobilen Datenträgers MDS bestimmt werden.

Gemäß einer ersten Ausführung des erfindungsgemäßen Verfahrens kann die Bestimmung des Indikator V für die Bewegungsrichtung unter Zuhilfenahme eines Vergleiches von Veränderungen der Empfangsfeldstärken der Datensignale an den Empfangspunkten Pa...Pd erfolgen. Dies hat im Beispiel der Figur 1 zur Folge, daß das Antennensignal fcd der Antenne d1, welche dem mobilen Datenträger MDS am nächsten liegt, die größte Amplitude aufweist, während das Antennensignal fca der Antenne a1, welche am weitesten entfernt vom mobilen Datenträger liegt, die kleinste Amplitude aufweist. Die Amplituden der Antennensignale fcb und fcc der dazwischen liegenden Antennen b1 und c1 weisen entsprechende Zwischenwerte auf. Bewegt sich nun der mobile Datenträger MDS auf der Bewegungsbahn 2 in Richtung V1, so wird nach einer gewissen Zeit die Amplitude des Antennensignals fcc der Antenne c1 maximal, u.s.w.. Diese Veränderungen können so ausgewertet werden, daß ein Indikator für die Bewegungsrichtung des mobilen Datenspeichers MDS entsteht.

Im Beispiel der Figur 1 werden hierzu die zwischenfrequenten Antennensignale fza...fzd einer Auswertungseinheit 31 zugeführt, welche durch Vergleich der zeitlichen Reihenfolge der Amplitudenwerte der Antennensignale von den einzelnen Empfangspunkten den Indikator V für die Bewegungsrichtung bereitstellt. Würde in einem anderen, nicht dargestellten Fall die Bewegung des mobilen Datenträgers nicht parallel sondern unter einem bestimmten Winkel zur Linie der Antennen a1...d1 erfolgen, so gibt der Indikator V die tangentiale Komponente der Bewegungsrichtung an.

Gemäß einer weiteren, oben bereits erläuterten Ausführung des erfindungsgemäßen Verfahrens kann die Bestimmung des Indikator V für die Bewegungsrichtung auch unter Zuhilfenahme einer Auswertung der zeitlichen Abfolge der logischen Inhalte der Datensignale an den Empfangspunkten Pa...Pd erfolgen. Hierzu werden die empfangenen Datensignale fca...fcd dekodiert und deren logische Inhalte verglichen. Für diese Ausführungsform ist es besonders vorteilhaft, wenn die Strahlungsdiagramme der Antennen a1...d1 entlang der Bewegungsbahn 2 des mobilen Datenträgers MDS möglichst gut ausgerichtet und fokussiert sind, und gegebenenfalls zusätzlich die Strahlungsdiagramme der Antennen a1...d1 eine möglichst begrenzte Überlappung zueinander aufweisen. Im Beispiel der Figur 1 überlappen sich die blasenförmigen Feldlinien Ca...Cd nur geringfügig.

Die Anwendung dieser Ausführung auf das in Figur 1 dargestellte Beispiel hat zur Folge, daß auf Grund der Position des mobilen Datenträgers MSD dekodierbare Datensignale gegebenenfalls nur von den Antennen d1 und c1 erfaßt werden können. Eine Dekodierung kann wiederum in der Auswerteeinheit 31 erfolgen. Bewegt sich der Datenträger MSD in Richtung V1, so können dekodierbare Datensignale z.B. von den Antennen c1 und b1 erfaßt werden. Diese Veränderungen in der Erfaßbarkeit können von der Auswerteeinheit 31 zur Bildung des Indikators V für die Bewegungsrichtung ausgewertet werden.

Würde sich beispielsweise zusätzlich zum mobilen Datenträger MSD ein zweiter Datenträger MSDx entlang der Bewegungsbahn 2 u.U. in umgekehrter Richtung V2 bewegen, d.h. in der Blattebene von Figur 1 von unten nach oben, so könnten andere Antennen, im Beispiel die Antennen a1 und b1, dessen Datensignal empfangen, während die Antennen d1 und c1 das Datensignal des Datenträgers MSD empfangen würden. Die Auswerteeinheit 31 kann diese Datensignale nach einer Dekodierung unterscheiden und den entsprechenden mobilen Datenträgern MDS bzw. MDSx auf Grund von deren logischen Inhalten zuordnen. Hiermit ist es möglich, die Bewegungsrichtungen von mehreren Datenträgern gleichzeitig zu erfassen, im Beispiel der Figur 1 die Richtung V1 des Datenträgers MDS und die umgekehrte Richtung V2 des Datenträgers MDSx.

Die Vorrichtung 3 kann auch als eine Sende- und Empfangseinrichtung zum bidirektionalen Austausch von Datensignalen mit mobilen Datenträgern ausgelegt sein. In einem solchen Fall ist die in Figur 1 dargestellte Empfangseinrichtung Teil der Gesamteinrichtung und es wären in jedem Kanal 3a...3d zusätzlich Sender zur Abstrahlung von Datensignalen enthalten. Diese sind in den Figuren aus Gründen der Übersichtlichkeit nicht dargestellt.

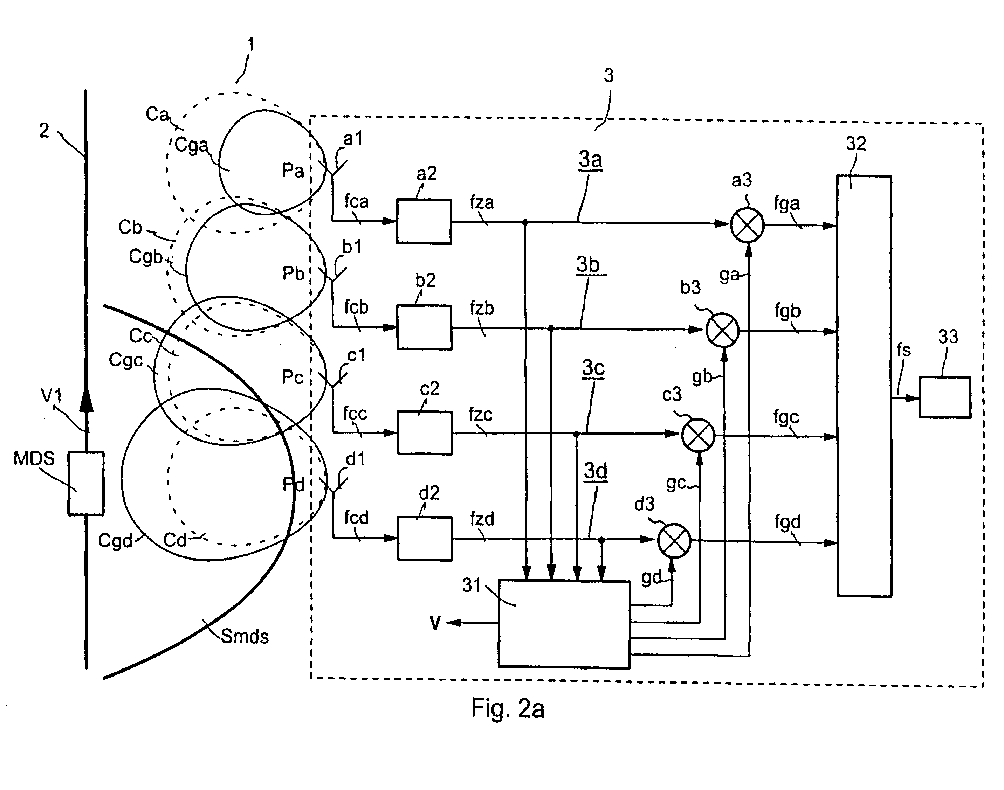

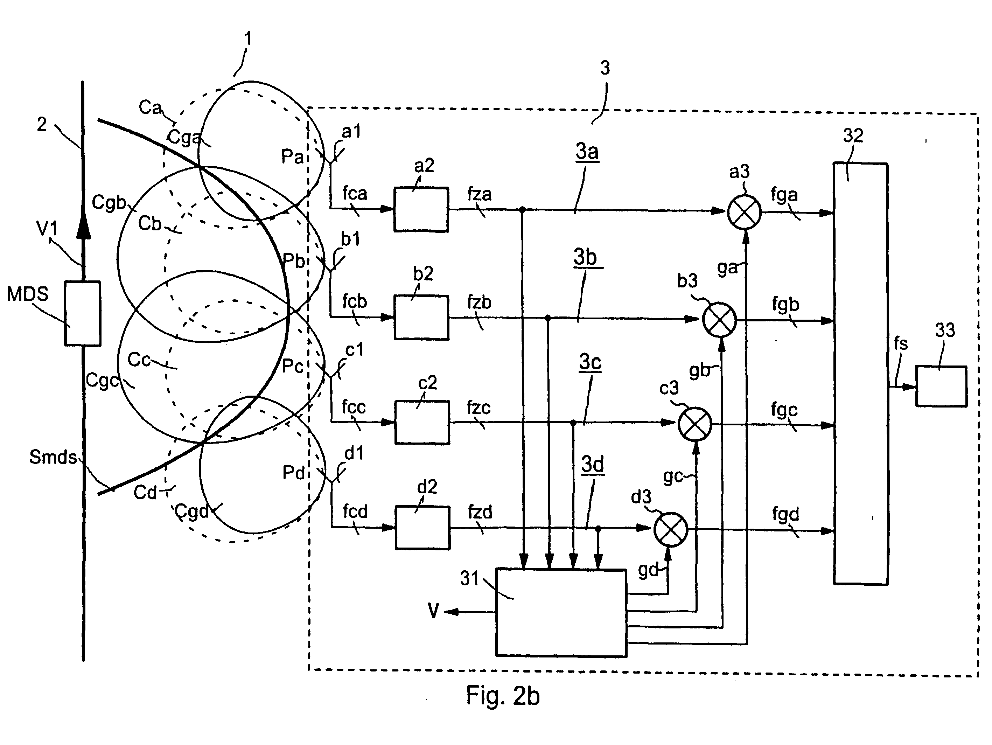

Unter Zuhilfenahme der Figuren 2a und 2b wird eine weitere Ausführung der Erfindung erläutert. Dabei werden bevorzugt in der Auswertungseinheit 31 aus den Empfangsfeldstärken Ca...Cd der Datensignale fca...fcd an den Empfangspunkten Pa...Pd zusätzlich Gewichtungsfaktoren ga...gd so abgeleitet, daß einem Datensignal mit starker bzw. schwacher Empfangsfeldstärke ein großer bzw. kleiner Gewichtungsfaktor zugeordnet wird. Wie bereits ober erläutert wurde, werden starke Empfangssignale hierdurch weiter verstärkt, während schwache Empfangssignale weiter abgeschwächt werden. Im Beispiel der Figur 2 sind hierzu in jedem Kanal 3a...3d zusätzlich Gewichtungseinheiten a3...d3 vorhanden, wodurch die zwischenfrequenten Antennensignale fza...fzd durch Beaufschlagung mit den Gewichtungsfaktoren ga...gd zu gewichteten Datensignalen fga...fagd umgewandelt werden. Diese werden wiederum der Verarbeitungseinheit 32 zugeführt, welche hieraus das aufbereitete Summen-Datensignal fs synthetisiert. Dieses weist einen besonders großen Signal-Störabstand auf und ist somit besonders fehlerfrei im Demodulator 33 dekodierbar.

Zur Verdeutlichung dieses Sachverhaltes sind in Figur 2a im Erfassungsbereich 1 einerseits in strichlierter Linie die gleich großen, blasenförmigen Feldlinien Ca...Cd von Figur 1, und andererseits in durchgezogener Linie die Feldlinien Cga...Cgd symbolisiert, welche sich nach einer Gewichtung ergeben. Da der Empfang von Datensignalen des mobilen Datenträgers MDS von der Antenne d1 bis zur Antenne a1 auf Grund der Abstandsverhältnisse zunehmend schlechter wird, wird beispielsweise das Antennensignal der Antenne d1 besonders stark, bzw. das Antennensignal der Antenne a1 besonders schwach bewertet. Dies bewirkt eine scheinbare Aufblähung bzw. Schrumpfung der Feldlinien Cga...Cgd gegenüber den ursprünglichen Zuständen Ca...Cd. Die Gewichtung bewirkt somit eine scheinbare Änderung der Empfangsreichweiten der Antennen a1...d1. Bewegt sich der mobiler Datenträger MDS innerhalb des Erfassungsbereiches, so verändern sich die einzelnen Empfangscharakteristiken der Antennen scheinbar infolge der durch die Gewichtung bewirkten Nachregelung der Amplituden der einzelnen Datensignale fga...fgd. Die resultierende Empfangscharakteristik aller Antennen scheint somit dem mobilen Datenträger MDS auf seiner Bewegung entlang der Bewegungsbahn 2 zu folgen. Wie oben bereits erläutert, kann eine solche Anordnung auch als eine "adaptive Antenne" bezeichnet werden.

Figur 2b zeigt beispielhaft den Zustand der Gewichtung, welcher sich bei einer Fortbewegung des mobilen Datenträgers MDS einstellt. Dabei befindet sich der Datenträger in einer den Empfangspunkten Pb, Pc und damit den Antennen b1, c1 gegenüber liegenden Position. Die Datensignale fgb,fgc werden somit verstärkend gewichtet, während die Datensignale fga,fgd dämpfend gewichtet werden. Dies hat die in Figur 2b gezeigte scheinbare Aufblähung bzw. Schrumpfung der Empfangscharakteristiken Cgb,Cgc bzw. Cga,Cgd zur Folge.

Im Beispiel der Figur 2a tragen somit die gewichteten Datensignale fgd...fga mit abnehmender Wertigkeit zur Bildung des aufbereiteten Summen-Datensignals fs bei. Entsprechend tragen im Beispiel der Figur 2b die gewichteten Datensignale fgb,fgc mit einer höheren und die gewichteten Datensignale fga,fgd mit einer niedrigeren Wertigkeit zur Bildung des aufbereiteten Summen-Datensignals fs bei. Andererseits kann auch die Bestimmung des Indikators für die Bewegungsrichtung vorteilhaft unter Zuhilfenahme einer Auswertung der mit den Gewichtungsfaktoren gewichteten, d.h. adaptierten, Datensignale bestimmt werden. Hierdurch kann die Selektivität auch der Bewegungsrichtungserfassung verbessert werden.

## Patentansprüche

1. Verfahren zur Erfassung der Bewegungsrichtung eines mobilen Datenträgers (MDS) entlang einer Bewegungsbahn (2), wobei
a) an mindestens zwei verschiedenen Empfangspunkten (Pa... Pd) der Bewegungsbahn (2) Datensignale (fca...fcd) des mobilen Datenträgers (MDS) erfasst werden,
b) Veränderungen des Empfangs der Datensignale (fca...fcd) untereinander an den Empfangspunkten (Pa...Pd) verglichen werden, und daraus
c) in einer adaptiven Empfangseinrichtung (3) ein Indikator (V) für die Bewegungsrichtung des mobilen Datenträgers (MDS) bestimmt wird,
**dadurch gekennzeichnet, dass** die adaptive Empfangseinrichtung (3) als Sende- und Empfangseinrichtung zum bidirektionalen Austausch von Datensignalen mit dem mobilen Datenträger (MDS) ausgebildet ist, über mindestens einen der Empfangspunkte (Pa...Pd) Datensignale vom mobilen Datenträger (MDS) empfängt und über mindestens einen zusätzlichen Sender Datensignale an den mobilen Datenträger (MDS) abstrahlt.

2. Verfahren nach Anspruch 1, **dadurch gekennzeichnet, daß** der Indikator (V) für die Bewegungsrichtung unter Zuhilfenahme eines Vergleiches von Veränderungen der Empfangsfeldstärken (Ca...Cd) von Datensignalen (fca.. .fcd) an den Empfangspunkten (Pa...Pd) bestimmt wird.

3. Verfahren nach Anspruch 1 oder 2, **dadurch gekennzeichnet, daß** durch
a) Vergleich der Empfangsfeldstärken (Ca...Cd) der Datensignale (fca...fcd) an den Empfangspunkten (Pa...Pd) Gewichtungsfaktoren (ga...gd) so abgeleitet werden, daß
b) einem Datensignal (fca...fcd) mit starker bzw. schwacher Empfangsfeldstärke (Ca...Cd) ein großer bzw. kleiner Gewichtungsfaktor (ga...gd) zugeordnet wird (fga...fgd).

4. Verfahren nach Anspruch 3, **dadurch gekennzeichnet, daß** der Indikator (V) für die Bewegungsrichtung unter Zuhilfenahme einer Auswertung der mit den Gewichtungsfaktoren (ga...gd) gewichteten Datensignale (fga...fgd) bestimmt wird.

5. Verfahren nach einem der vorangegangenen Ansprüche, **dadurch gekennzeichnet, daß** der Indikator (V) für die Bewegungsrichtung unter Zuhilfenahme eines Vergleiches der Art der Datensignale (fca...fcd) an den Empfangspunkten (Pa...Pd) bestimmt wird.

6. Verfahren nach einem der vorangegangenen Ansprüche, **dadurch gekennzeichnet , daß** die empfangenen Datensignale (fca...fcd) dekodiert und deren logische Inhalte bestimmt werden.

7. Verfahren nach Anspruch 6, **dadurch gekennzeichnet, daß** der Indikator (V) für die Bewegungsrichtung unter Zuhilfenahme einer Auswertung der zeitlichen Abfolge der logischen Inhalte der Datensignale an den Empfangspunkten (Pa...Pd) bestimmt wird.

8. Verfahren nach Anspruch 6 oder 7, **dadurch gekennzeichnet, daß** die logischen Inhalte der Datensignale (fca...fcd) mobilen Datenträgern (MDS) zugeordnet werden.

9. Vorrichtung zur Erfassung der Bewegungsrichtung eines mobilen Datenträgers (MDS) entlang einer Bewegungsbahn (2) mit einer adaptiven Empfangseinrichtung (3), welche aufweist
a) mindestens zwei Antennen (a1...d1) zumindest zum Empfang von Datensignalen (fca...fcd), welche an zumindest zwei Empfangspunkten (Pa...Pd) entlang der Bewegungsbahn (2) des mobilen Datenträgers (MDS) angeordnet sind, und
b) einer Auswertungseinheit (31), welche mit den Antennen (a1...d1) verbunden ist und aus den Datensignalen (fca...fcd) einen Indikator (V) für die Bewegungsrichtung des mobilen Datenträgers (MDS) bestimmt,
**dadurch gekennzeichnet, daß** die adaptive Empfangseinrichtung (3) als Sende- und Empfangseinrichtung zum bidirektionalen Austausch von Datensignalen mit dem mobilen Datenträger (MDS) ausgebildet ist, über mindestens einen der Empfangspunkte (Pa...Pd) Datensignale vom mobilen Datenträger (MDS) empfängt und über mindestens einen zusätzlichen Sender Datensignale an den mobilen Datenträger (MDS) abstrahlt.

10. Vorrichtung nach Anspruch 9, **gekennzeichnet durch** Antennen (a1...d1), deren Strahlungsdiagramme entlang der Bewegungsbahn (2) mobiler Datenträger (MDS) möglichst gut ausgerichtet und fokussiert sind.

11. Vorrichtung nach Anspruch 10, **dadurch gekennzeichnet, daß** die Strahlungsdiagramme der Antennen (a1...d1) eine möglichst begrenzte Überlappung zueinander aufweisen.

12. Verwendung eines Verfahrens nach einem der Ansprüche 1 bis 8 bei einem Identifikationssystem, welches zumindest an beweglichen Gütern angebrachte mobile Datenträger (MDS) aufweist, wobei in einem mobilen Datenträger (MDS) das jeweilige Gut kennzeichnende Daten gespeichert sind.

13. Verwendung einer Vorrichtung nach einem der Ansprüche 9 bis 12 bei einem Identifikationssystem, welches zumindest an beweglichen Gütern angebrachte mobile Datenträger (MDS) aufweist, wobei in einem mobilen Datenträger (MDS) das jeweilige Gut kennzeichnende Daten gespeichert sind.

## Claims

1. Method for recording the direction of movement of a mobile data store (MDS) along a movement path (2), where
a) at least two different receive points (Pa...Pd) of the movement path (2) data signals (fca...fcd) of the mobile data store (MDS) are recorded
b) changes in the receipt of the data signals (fca...fcd) in relation to one another are compared at the receive points (Pa...Pd) and from these changes
c) in an adaptive receive device (3) an indicator (V) for the direction of movement of the mobile data store (MDS) is determined,
**characterized in that** the adaptive receive device (3) is designed as a transceiver for bidirectional exchange of data signals with the mobile data store (MDS), data signals are received via at least one of the receive points (Pa...Pd) from the mobile data store (MDS) and data signals are transmitted via at least one additional transmitter to the mobile data store (MDS).

2. Method according to Claim 1, **characterized in that** the indicator (V) for the direction of movement is determined with the aid of a comparison of the receive field strengths (Ca ...Cd) of data signals (fca...fcd) at the receive points (Pa...Pd).

3. Method in accordance with Claim 1 or 2, **characterized in that**
a) by comparing the field strengths (Ca ...Cd) of the data signals (fca...fcd) at the receive points (Pa...Pd) weighting factors (ga...gd) are derived in such a way that
b) a data signal (fca...fcd) with stronger or weaker receive field strength (Ca...Cd) is assigned (fga...fgd) a greater or smaller weighting factor (ga...gd).

4. Method according to Claim 3, **characterized in that** the indicator (V) for the direction of movement is determined with the aid of an evaluation of the data signals (fga...fgd) weighted with the weighting factors (ga...gd).

5. Method according to one of the previous claims, **characterized in that** the indicator (V) for the direction of movement is determined with the aid of a comparison of the type of data signals (fca...fcd) at the receive points (Pa...Pd).

6. Method according to one of the previous claims, **characterized in that** the received data signals (fca...fcd) are decoded and their logical content determined.

7. Method according to Claim 6, **characterized in that** the indicator (V) for the direction of movement is determined with the aid of an evaluation of the time sequence of the logical content of the data signals at the receive points (Pa...Pd).

8. Method in accordance with Claim 6 or 7 **characterized in that** the logical contents of the data signals (fca...fcd) are assigned to mobile data stores (MDS).

9. Device for recording the direction of movement of a mobile data store (MDS) along a movement path (2) with an adaptive receive device (3), which features
a) at least two antennas (a1...d1) for at least receiving data signals (fca...fcd), which are arranged at at least two receive points (Pa...Pd) along the movement path (2) of the mobile data store (MDS), and
b) an evaluation unit (31), which is connected to the antennas (a1...d1) and determines from the data signals (fca...fcd) an indicator (V) for the direction of movement of the mobile data store (MDS),
**characterized in that** the adaptive receive device (3) is embodied as a transceiver for bidirectional exchange of data signals with the mobile data store (MDS), receives data signals from the mobile data store via at least one of the receive points (Pa...Pd) and transmits data signals to the mobile data store (MDS) via at least one additional transmitter.

10. Arrangement in accordance with Claim 9, **characterized by** antennas (a1...d1), for which the radiation diagrams are aligned and focused as well as possible along the movement path (2) of mobile data stores (MDS).

11. Arrangement in accordance with Claim 10, **characterized in that** the radiation diagrams of the antennas (a1...d1) feature as restricted an overlap with each other as possible.

12. Use of a method according to one of the Claims 1 to 8 with an identification system which features at least mobile data stores attached to movable goods, where data identifying the goods item is stored in the mobile data store (MDS) in each case.

13. Use of a device according to one of the Claims 9 to 12 with an Identification system with an identification system which features at least mobile data stores attached to movable goods, where data identifying the goods item is stored in the mobile data store (MDS) in each case.

## Revendications

1. Procédé pour détecter le sens de mouvement d'un support de données mobile (MDS) le long d'une trajectoire (2),
a) en au moins deux points de réception différents (Pa à Pd) de la trajectoire (2), on détecte des signaux de données (fca à fcd) du support de données mobile (MDS),
b) on compare des modifications de la réception des signaux de données (fca à fcd) aux points de réception (Pa à Pd), et
c) on détermine à partir de là, dans un dispositif de réception adaptatif (3), un indicateur (V) pour le sens de mouvement du support de données mobile (MDS),
**caractérisé par le fait que** le dispositif de réception adaptatif (3) est conçu comme dispositif d'émission et dé réception pour l'échange bidirectionnel de signaux de données avec le support de données mobile (MDS), qu'il reçoit des signaux de données du support de données mobile (MDS) par l'intermédiaire d'au moins l'un des points de réception (Pa à Pd) et qu'il émet des signaux de données vers le support de données mobile (MDS) par l'intermédiaire d'au moins un émetteur supplémentaire.

2. Procédé selon la revendication 1, **caractérisé par le fait qu'**on détermine l'indicateur (V) pour le sens de mouvement à l'aide d'une comparaison de modifications des intensités de champ reçu (Ca à Cd) de signaux de données (fca à fcd) aux points de réception (Pa à Pd).

3. Procédé selon la revendication 1 ou 2, **caractérisé par le fait que**
a) en comparant les intensités de champ reçu (Ca à Cd) des signaux de données (fca à fcd) aux points de réception (Pa à Pd), on déduit des facteurs de pondération (ga à gd) de telle sorte que
b) un facteur de pondération (ga à gd) plus grand ou plus petit est associé (fga à fgd) à un signal de données (fca à fcd) ayant une intensité de champ reçu (Ca à Cd) plus forte ou plus faible.

4. Procédé selon la revendication 3, **caractérisé par le fait qu'**on détermine l'indicateur (V) pour le sens de mouvement à l'aide d'une évaluation des signaux de données (fga à fgd) pondérés avec les facteurs de pondération (ga à gd).

5. Procédé selon l'une des revendications précédentes, **caractérisé par le fait qu'**on détermine l'indicateur (V) pour le sens de mouvement à l'aide d'une comparaison du type des signaux de données (fca à fcd) aux points de réception (Pa à Pd).

6. Procédé selon l'une des revendications précédentes, **caractérisé par le fait qu'**on décode les signaux de données reçus (fca à fcd) et on détermine leurs contenus logiques.

7. Procédé selon la revendication 6, **caractérisé par le fait qu'**on détermine l'indicateur (V) pour le sens de mouvement à l'aide d'une évaluation de la succession chronologique des contenus logiques des signaux de données aux points de réception (Pa à Pd).

8. Procédé selon la revendication 6 ou 7, **caractérisé par le fait qu'**on associe les contenus logiques des signaux de données (fca à fcd) à des supports de données mobiles (MDS).

9. Dispositif pour détecter le sens de mouvement d'un support de données mobile (MDS) le long d'une trajectoire (2) avec un dispositif de réception adaptatif (3), qui comporte
a) au moins deux antennes (a1 à d1) au moins pour la réception de signaux de données (fca à fcd), lesquelles sont disposées en au moins deux points de réception (Pa à Pd) le long de la trajectoire (2) du support de données mobile (MDS), et
b) une unité d'évaluation (31) qui est reliée aux antennes (a1 à d1) et qui détermine à partir des signaux de données (fca à fcd) un indicateur (V) pour le sens de mouvement du support de données mobile (MDS),
**caractérisé par le fait que** le dispositif de réception adaptatif (3) est conçu comme dispositif d'émission et de réception pour l'échange bidirectionnel de signaux de données avec le support de données mobile (MDS), qu'il reçoit des signaux de données du support de données mobile (MDS) par l'intermédiaire d'au moins l'un des points de réception (Pa à Pd) et qu'il émet des signaux de données vers le support de données mobile (MDS) par l'intermédiaire d'au moins un émetteur supplémentaire.

10. Dispositif selon la revendication 9, **caractérisé par** des antennes (a1 à d1) dont les diagrammes de rayonnement sont orientés et focalisés le mieux possible le long de la trajectoire (2) de supports de données mobiles (MDS).

11. Dispositif selon la revendication 10, **caractérisé par le fait que** les diagrammes de rayonnement des antennes (a1 à d1) ont l'un par rapport à l'autre un chevauchement le plus limité possible.

12. Utilisation d'un procédé selon l'une des revendications 1 à 8 dans un système d'identification qui comporte au moins des supports de données mobiles (MDS) placés sur des marchandises mobiles, des données caractérisant la marchandise respective étant mémorisées alors dans un support de données mobile (MDS).

13. Utilisation d'un dispositif selon l'une des revendications 9 à 12 dans un système d'identification qui comporte au moins des supports de données mobiles (MDS) placés sur des marchandises mobiles, des données caractérisant la marchandise respective étant mémorisées alors dans un support de données mobile (MDS).
